# EUROPEAN PATENT SPECIFICATION

(11) **EP 3 064 029 B1**
(45) Date of publication and mention of the grant of the patent: **30.05.2018**
(21) Application number: 14802268.4
(22) Date of filing: 31.10.2014
(51) Int. Cl.: H04W 84/18

(54) **SYSTEMS, APPARATUS, AND METHODS FOR PROVIDING STATE UPDATES IN A MESH NETWORK**
SYSTEME, VORRICHTUNG UND VERFAHREN ZUR BEREITSTELLUNG VON STATUSAKTUALISIERUNGEN IN EINEM MESH-NETZWERK
SYSTÈMES, APPAREIL ET PROCÉDÉS DE FOURNITURE DE MISES À JOUR D'ÉTATS DANS UN RÉSEAU MAILLÉ

(30) Priority: 01.11.2013 US 201361899118 P; 30.10.2014 US 201414528291
(43) Date of publication of application: 07.09.2016
(73) Proprietor: Qualcomm Incorporated, San Diego, CA 92121-1714 (US)
(72) Inventor: JAFARIAN, Amin, Princeton, New Jersey 08540 (US); CHERIAN, George, San Diego, California 92121-1714 (US)
(74) Representative: Schmidbauer, Andreas Konrad
(86) International application number: PCT/US2014/063343
(87) International publication number: WO 2015/066423

(56) References cited:
- WO-A1-03/090411
- WO-A1-2013/114648
- WO-A2-2006/119281
- WO-A2-2012/096611
- US-A1- 2004 024 852
- US-A1- 2007 070 929
- US-A1- 2007 078 999
- US-A1- 2008 137 672
- US-A1- 2008 165 722
- US-A1- 2010 189 029
- US-A1- 2011 019 689
- US-A1- 2012 135 677

## Description

### FIELD

The present application relates generally to wireless communications, and more specifically to systems, methods, and devices for using a relay in a wireless communication network.

### BACKGROUND

In many telecommunication systems, communications networks are used to exchange messages among several interacting spatially-separated devices. Networks can be classified according to geographic scope, which could be, for example, a metropolitan area, a local area, or a personal area. Such networks would be designated respectively as a wide area network (WAN), metropolitan area network (MAN), local area network (LAN), wireless local area network (WLAN), or personal area network (PAN). Networks also differ according to the switching/bridging technique used to interconnect the various network nodes and devices (e.g., circuit switching vs. packet switching), the type of physical media employed for transmission (e.g., wired vs. wireless), and the set of communication protocols used (e.g., Internet protocol suite, SONET (Synchronous Optical Networking), Ethernet, etc.).

Wireless networks are often preferred when the network elements are mobile and thus have dynamic connectivity needs, or if the network architecture is formed in an ad hoc, rather than fixed, topology. Wireless networks employ intangible physical media in an unguided propagation mode using electromagnetic waves in the radio, microwave, infra-red, optical, etc., frequency bands. Wireless networks advantageously facilitate user mobility and rapid field deployment when compared to fixed wired networks.

The devices in a wireless network can transmit/receive information between each other. In some aspects, the devices on a wireless network can have a limited transmission range. Relay devices can extend the range of a wireless network, but can increase overhead such as, for example, association, encryption, and filtering overhead. Thus, improved systems, methods, and devices for associating, encrypting, and filtering are desired for wireless networks having at least one relay node.

Attention is drawn to document US 2008/165722 A1 describing a radio communication system that includes a plurality of radio devices and a plurality of terminal devices. The plurality of radio devices forms a mesh-type radio network. A plurality of terminal devices belong to a radio device and another plurality of terminal devices belong to another radio device. The plurality of radio devices each have global terminal connection information representing the connection between the terminal devices and the radio devices in the entire radio communication system. A radio device and another radio device relay radio communication between a terminal device and another terminal device using the global terminal connection information. When any of its subordinate terminal devices changes, each of the plurality of radio devices floods only the change information in the radio communication system.

Attention is further drawn to WO 2006/119281 A2 describing that wireless network devices discover individual mesh nodes and networks of mesh nodes. An association is formed on the basis of peer-to-peer interactions at layer-1, layer-2 and/or higher layers of the Open System Interconnect (OSI) model. In particular, the system uses Beacon, Probe Request, Probe Response, Association Request, Association Response, and Disassociation frames and introduces a new Extensible Mesh Information Element (EMIE) used by mesh nodes to discover, authenticate, and associate with other peer nodes.

### SUMMARY

In accordance with the present invention a method, and an apparatus, as set forth in the independent claims, respectively, are provided. Preferred embodiments of the invention are described in the dependent claims.

The systems, methods, and devices of the invention each have several aspects, no single one of which is solely responsible for its desirable attributes. Without limiting the scope of this invention as expressed by the claims which follow, some features will now be discussed briefly. After considering this discussion, and particularly after reading the section entitled "Detailed Description" one will understand how the features of this invention provide advantages that include improved communications between access points and stations in a wireless network.

One innovative aspect of the present disclosure includes an apparatus communicatively coupled with a descendant node. The apparatus includes a processing system configured to generate a message identifying an address of the descendant node and information identifying a change in state of the descendant node or information identifying a capability of the descendant node.

In various aspects, the processing system can be further configured to determine the change in state of the descendant node based on an indication in an association request frame, a probe request frame, a disassociation frame, or a relay update notification, wherein the generation of the message is based on the determination. The information identifying the change in state of the descendant node can include one or more flags indicating: whether or not the descendant node has associated with the apparatus or a descendant of the apparatus, whether or not the descendant node has disassociated from the apparatus or a descendant of the apparatus, whether or not the descendant node has changed behavior from a relay to a non-relay node, or whether or not the descendant node has changed behavior from a non-relay to a relay node.

In various aspects, the processing system can be further configured to determine the capability of the descendant node based on an indication in an association request frame, a probe request frame, a disassociation frame, or a relay update notification, wherein the generation of the message is based on the determination. The information identifying the capability of the descendant node can further include one or more flags indicating: whether or not the descendant node is capable of acting as a relay, whether or not the descendant node is acting as a relay, or whether or not the descendant node is capable of acting as a relay and is not acting as a relay.

In various aspects, processing system can be further configured to receive an update from a child node of the apparatus. The processing system can be further configured to generate the message based on the update. The processing system can be further configured to provide the message to a parent node of the apparatus.

In various aspects, the processing system can be further configured to increment a hop count of the update when generating the message based on the update. In various aspects, the processing system can be further configured to encapsulate the message in at least one of: a reachable address update frame, a probe request frame, or an association request frame. In various aspects, the generation of the message can include including a source address of the apparatus in the message.

Another aspect provides a method of providing information in a wireless network. The method includes generating, by an apparatus being communicatively coupled with a descendant node, a message. The message identifies an address of the descendant node and information identifying a change in state of the descendant node or information identifying a capability of the descendant node.

In various aspects, the method can further include determining the change in state of the descendant node based on an indication in an association request frame, a probe request frame, a disassociation frame, or a relay update notification, wherein the generation of the message is based on the determination. The information identifying the change in state of the descendant node can further include one or more flags indicating: whether or not the descendant node has associated with the apparatus or a descendant of the apparatus, whether or not the descendant node has disassociated from the apparatus or a descendant of the apparatus, whether or not the descendant node has changed behavior from a relay to a non-relay node, or whether or not the descendant node has changed behavior from a non-relay to a relay node.

In various aspects, the method can further include determining the capability of the descendant node based on an indication in an association request frame, a probe request frame, a disassociation frame, or a relay update notification, wherein the generation of the message is based on the determination. The information identifying the capability of the descendant node can further include one or more flags indicating: whether or not the descendant node is capable of acting as a relay, whether or not the descendant node is acting as a relay, or whether or not the descendant node is capable of acting as a relay and is not acting as a relay.

In various aspects, the method can further include receiving an update from a child node of the apparatus. The method can further include generating the message based on the update. The method can further include providing the message to a parent node of the apparatus.

In various aspects, the method can further include incrementing a hop count of the update when generating the message based on the update. In various aspects, the method can further include encapsulating the message in at least one of: a reachable address update frame, a probe request frame, or an association request frame. In various aspects, generating the message can include including a source address of the apparatus in the message.

Another aspect provides a computer program product for communication. The product includes a computer-readable medium including instructions that, when executed, cause an apparatus to generate a message identifying an address of a descendant node communicatively coupled with the apparatus and information identifying a change in state of the descendant node or information identifying a capability of the descendant node.

Another aspect provides an apparatus for providing information in a wireless network. The apparatus includes means for generating a message. The message identifies an address of a descendant node communicatively coupled with the apparatus and information identifying a change in state of the descendant node or information identifying a capability of the descendant node. The apparatus further includes means for providing the message for transmission.

In various aspects, the apparatus can further include means for determining the change in state of the descendant node based on an indication in an association request frame, a probe request frame, a disassociation frame, or a relay update notification, wherein the generation of the message is based on the determination. The information identifying the change in state of the descendant node can further include one or more flags indicating: whether or not the descendant node has associated with the apparatus or a descendant of the apparatus, whether or not the descendant node has disassociated from the apparatus or a descendant of the apparatus, whether or not the descendant node has changed behavior from a relay to a non-relay node, or whether or not the descendant node has changed behavior from a non-relay to a relay node.

In various aspects, the apparatus can further include means for determining the capability of the descendant node based on an indication in an association request frame, a probe request frame, a disassociation frame, or a relay update notification, wherein the generation of the message is based on the determination. The information identifying the capability of the descendant node can further include one or more flags indicating: whether or not the descendant node is capable of acting as a relay, whether or not the descendant node is acting as a relay, or whether or not the descendant node is capable of acting as a relay and is not acting as a relay.

In various aspects, the apparatus can further include means for receiving an update from a child node of the apparatus. The apparatus can further include means for generating the message based on the update. The apparatus can further include means for providing the message to a parent node of the apparatus. In various aspects, said means for determining can include means for determining the capability of the descendant node based on an indication in an association request frame, a probe request frame, a disassociation frame, or a relay update notification.

In various aspects, the apparatus can further include means for incrementing a hop count of the update when generating the message based on the update. In various aspects, the apparatus can further include means for encapsulating the message in at least one of: a reachable address update frame, a probe request frame, or an association request frame. In various aspects, generating the message includes means for including a source address of the apparatus in the message.

Another aspect provides a wireless node communicatively coupled with a descendant node. The node includes a processing system configured to generate a message. The message identifies an address of the descendant node and information identifying a change in state of the descendant node or information identifying a capability of the descendant node. The node further includes an antenna configured to transmit the message.

Another aspect provides a wireless node communicatively coupled with a descendant node. The wireless node includes a processing system configured to generate a message identifying an address of the descendant node and information identifying a change in state of the descendant node or information identifying a capability of the descendant node. The wireless node further includes a transmitter configured to transmit the message.

### BRIEF DESCRIPTION OF THE DRAWINGS

FIG. 1 shows an exemplary wireless communication system.
FIG. 2A shows another exemplary wireless communication system in which aspects of the present disclosure can be employed.
FIG. 2B shows another exemplary wireless communication system in which aspects of the present disclosure can be employed.
FIG. 3 shows an exemplary functional block diagram of a wireless device that can be employed within the wireless communication systems of FIGS. 1, 2A, and/or 2B.
FIG. 4A illustrates a wireless communications system, according to an aspect.
FIG. 4B illustrates a wireless communications system, according to another aspect.
FIG. 5 illustrates a wireless communications system, according to another aspect.
FIG. 6 shows an exemplary management frame format.
FIG. 7 shows an exemplary relay information element.
FIG. 8 shows an exemplary efficient relay information element.
FIG. 9 is a flowchart of an exemplary method of communicating in a wireless network.
FIG. 10 is a functional block diagram of a wireless device, in accordance with an exemplary aspect of the invention.

### DETAILED DESCRIPTION

Various aspects of the novel systems, apparatuses, and methods are described more fully hereinafter with reference to the accompanying drawings. The teachings disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the novel systems, apparatuses, and methods disclosed herein, whether implemented independently of or combined with any other aspect of the invention. For example, an apparatus may be implemented or a method may be practiced using any number of the aspects set forth herein. In addition, the scope of the invention is intended to cover such an apparatus or method which is practiced using other structure, functionality, or structure and functionality in addition to or other than the various aspects of the invention set forth herein. It should be understood that any aspect disclosed herein may be embodied by one or more elements of a claim.

Although particular aspects are described herein, many variations and permutations of these aspects fall within the scope of the disclosure. Although some benefits and advantages of the preferred aspects are mentioned, the scope of the disclosure is not intended to be limited to particular benefits, uses, or objectives. Rather, aspects of the disclosure are intended to be broadly applicable to different wireless technologies, system configurations, networks, and transmission protocols, some of which are illustrated by way of example in the figures and in the following description of the preferred aspects. The detailed description and drawings are merely illustrative of the disclosure rather than limiting, the scope of the disclosure being defined by the appended claims and equivalents thereof.

Wireless network technologies may include various types of wireless local area networks (WLANs). A WLAN may be used to interconnect nearby devices together, employing widely used networking protocols. The various aspects described herein may apply to any communication standard, such as WiFi or, more generally, any member of the IEEE 802.11 family of wireless protocols. For example, the various aspects described herein may be used as part of the IEEE 802.11ah protocol, which uses sub-1GHz bands.

In some aspects, wireless signals in a sub-gigahertz band may be transmitted according to the 802.11ah protocol using orthogonal frequency-division multiplexing (OFDM), direct-sequence spread spectrum (DSSS) communications, a combination of OFDM and DSSS communications, or other schemes. Implementations of the 802.11ah protocol may be used for sensors, metering, and smart grid networks. Advantageously, aspects of certain devices implementing the 802.11ah protocol may consume less power than devices implementing other wireless protocols, and/or may be used to transmit wireless signals across a relatively long range, for example about one kilometer or longer.

In some implementations, a WLAN includes various devices which are the components that access the wireless network. For example, there may be three types of devices: access points ("APs"), relays, and clients (also referred to as stations, or "STAs"). In general, an AP serves as a hub or base station for the WLAN, a relay device provides a communication link between the AP for the WLAN and one or more STAs, which serve as users of the WLAN. For example, an STA may be a laptop computer, a personal digital assistant (PDA), a mobile phone, etc. In an example, an STA connects to an AP, through a relay device, via WiFi (e.g., IEEE 802.11 protocol such as 802.11ah) compliant wireless links to obtain general connectivity to the Internet or to other wide area networks. In some implementations, an STA may also be used as a relay device.

An access point ("AP") may also comprise, be implemented as, or known as a NodeB, Radio Network Controller ("RNC"), eNodeB, Base Station Controller ("BSC"), Base Transceiver Station ("BTS"), Base Station ("BS"), Transceiver Function ("TF"), Radio Router, Radio Transceiver, or some other terminology.

A station "STA" may also comprise, be implemented as, or known as an access terminal ("AT"), a subscriber station, a subscriber unit, a mobile station, a remote station, a remote terminal, a user terminal, a user agent, a user device, user equipment, or some other terminology. In some implementations, an access terminal may comprise a cellular telephone, a cordless telephone, a Session Initiation Protocol ("SIP") phone, a wireless local loop ("WLL") station, a personal digital assistant ("PDA"), a handheld device having wireless connection capability, or some other suitable processing device connected to a wireless modem. Accordingly, one or more aspects taught herein may be incorporated into a phone (e.g., a cellular phone or smartphone), a computer (e.g., a laptop), a portable communication device, a headset, a portable computing device (e.g., a personal data assistant), an entertainment device (e.g., a music or video device, or a satellite radio), a gaming device or system, a global positioning system device, or any other suitable device that is configured to communicate via a wireless medium.

A wireless node may comprise an access terminal ("AT") or STA, an AP or a relay-capable wireless device having at least one of a STA or AP operation, i.e., a wireless node may have AT or STA operation, AP operation, or both AT/STA and AP operations.

As discussed above, certain of the devices described herein may implement the 802.11ah standard, for example. Such devices, whether used as an STA, a relay device, an AP, or other device, may be used for smart metering or in a smart grid network. Such devices may provide sensor applications or be used in home automation. The devices may instead or in addition be used in a healthcare context, for example for personal healthcare. They may also be used for surveillance, to enable extended-range Internet connectivity (e.g., for use with hotspots), or to implement machine-to-machine communications.

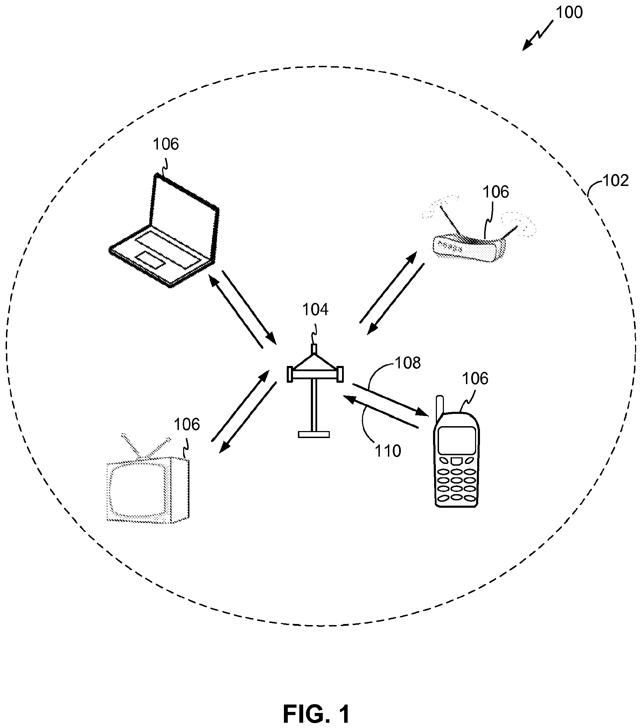

FIG. 1 shows an exemplary wireless communication system 100. The wireless communication system 100 can operate pursuant to a wireless standard, for example an 802.11 standard. The wireless communication system 100 can include an AP 104, which communicates with STAs 106.

A variety of processes and methods can be used for transmissions in the wireless communication system 100 between the AP 104 and the STAs 106. For example, signals can be sent and received between the AP 104 and the STAs 106 in accordance with orthogonal frequency-division multiplexing ("OFDM/OFDMA") techniques. In aspects employing OFDM/OFDMA techniques, the wireless communication system 100 can be referred to as an OFDM/OFDMA system. Alternatively, signals can be sent and received between the AP 104 and the STAs 106 in accordance with code division multiple access ("CDMA") techniques. In aspects employing CDMA techniques, the wireless communication system 100 can be referred to as a CDMA system.

A communication link that facilitates transmission from the AP 104 to one or more of the STAs 106 can be referred to as a downlink (DL) 108, and a communication link that facilitates transmission from one or more of the STAs 106 to the AP 104 can be referred to as an uplink (UL) 110. Alternatively, a downlink 108 can be referred to as a forward link or a forward channel, and an uplink 110 can be referred to as a reverse link or a reverse channel.

The AP 104 can act as a base station and provide wireless communication coverage in a basic service area (BSA) 102. The AP 104, along with the STAs 106 associated with the AP 104, and that use the AP 104 for communication, can be referred to as a basic service set (BSS). It should be noted that the wireless communication system 100 can be configured as a peer-to-peer network between the STAs 106, without a central AP 104. Accordingly, the functions of the AP 104 described herein can alternatively be performed by one or more of the STAs 106.

The AP 104 can transmit a beacon signal (or simply a "beacon"), via a communication link such as the downlink 108, to other nodes STAs 106 of the system 100, which can help the other nodes STAs 106 to synchronize their timing with the AP 104, or which can provide other information or functionality. Such beacons can be transmitted periodically. In one aspect, the period between successive transmissions can be referred to as a superframe. Transmission of a beacon can be divided into a number of groups or intervals. In one aspect, the beacon can include, but is not limited to, information such as timestamp information to set a common clock, a peer-to-peer network identifier, a device identifier, capability information, a superframe duration, transmission direction information, reception direction information, a neighbor list, and/or an extended neighbor list, some of which are described in additional detail below. Thus, a beacon can include information both common (e.g., shared) amongst several devices, and information specific to a given device.

In some aspects, a STA 106 can associate with the AP 104 and send communications to and/or receive communications from the AP 104. In one aspect, information for associating is included in a beacon broadcast by the AP 104. To receive the beacon, the STA 106 can, for example, perform a broad coverage search over a coverage region. The STA 106 can also perform a search by sweeping a coverage region in a lighthouse fashion, for example. After receiving the information for associating, the STA 106 can transmit a reference signal, such as an association probe or request, to the AP 104. In some aspects, the AP 104 can use backhaul services, for example, to communicate with a larger network, such as the Internet or a public switched telephone network (PSTN).

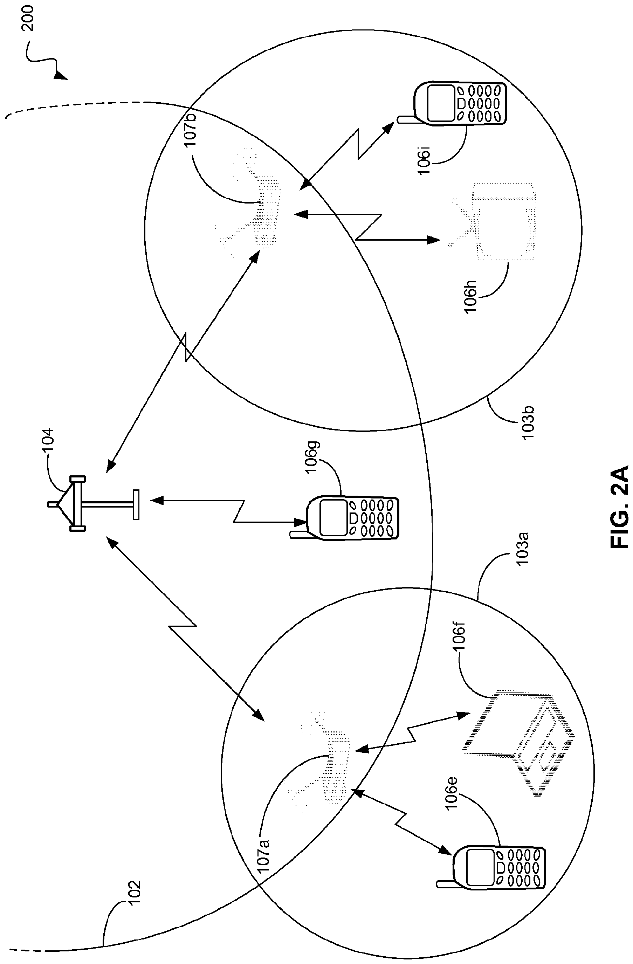

FIG. 2A shows another exemplary wireless communication system 200 in which aspects of the present disclosure can be employed. The wireless communication system 200 can also operate pursuant to a wireless standard, for example any one of the 802.11 standards. The wireless communication system 200 includes an AP 104, which communicates with relays 107a-107b and one or more STAs 106. The relays 107a-107b can also communicate with one or more STAs 106. The wireless communication system 200 can function in accordance with OFDM/OFDMA techniques and/or CDMA techniques.

The AP 104 can act as a base station and provide wireless communication coverage in the basic service area (BSA) 102. In an aspect, one or more STAs 106 can be located within the AP's BSA 102 while other STAs can be located outside the AP's BSA 102. For example, as illustrated in FIG. 2A, STA 106g can be located within the AP 104's BSA 102. As such, STA 106g can associate with the AP 104 and perform wireless communications directly with the AP 104. Other STAs such as, for example, the STAs 106e-106f and 106h-106i can be outside the BSA 102 of the AP 104. The relays 107a-107b can be inside the BSA 102 of the AP 104. As such, the relays 107a-107b can be able to associate with the AP 104 and perform wireless communications directly with the AP 104.

The AP 104 can transmit a beacon signal (or simply a "beacon"), via a communication link such as the downlink 108, to other nodes STAs 106 of the system 200, which can help the STA 106g or the relays 107a-107b to synchronize their timing with the AP 104, or which can provide other information or functionality. Such beacons can be transmitted periodically. In one aspect, the period between successive transmissions can be referred to as a superframe. Transmission of a beacon can be divided into a number of groups or intervals. In one aspect, the beacon can include, but is not limited to, such information as timestamp information to set a common clock, a peer-to-peer network identifier, a device identifier, capability information, a superframe duration, transmission direction information, reception direction information, a neighbor list, and/or an extended neighbor list, some of which are described in additional detail below. Thus, a beacon can include information both common (e.g., shared) amongst several devices, and information specific to a given device.

In some aspects, the STA 106g and/or the relays 107a-107b can associate with the AP 104 and send communications to and/or receive communications from the AP 104. In one aspect, information for associating is included in a beacon broadcast by the AP 104. To receive such a beacon, the STA 106g and/or the relays 107a-107b can, for example, perform a broad coverage search over a coverage region. The STAs 106 and/or the relays 107a-107b can also perform a search by sweeping a coverage region in a lighthouse fashion, for example. After receiving the information for associating, the STA 106g and/or the relays 107a-107b can transmit a reference signal, such as an association probe or request, to the AP 104. In some aspects, the AP 104 can use backhaul services, for example, to communicate with a larger network, such as the Internet or a public switched telephone network (PSTN).

The AP 104, along with the STAs 106 and/or the relays 107a-107b associated with the AP 104, and that use the AP 104 for communication, can be referred to as a basic service set (BSS). It should be noted that the wireless communication system 200 can function as a peer-to-peer network between the STAs 106 and/or the relays 107a-107b, without the central AP 104. Accordingly, the functions of the AP 104 described herein can alternatively be performed by one or more of the STAs 106 and the relays 107a-107b.

The relays 107a and 107b can also act as a base station and provide wireless communication coverage in a basic service area 103a and 103b, respectively. In an aspect, some STAs 106 can be located within the BSA of a relay 107a or 107b. For example, the STA 106e and the STA 106f are illustrated within the BSA 103a of the relay 107a. The STA 106h and the STA 106i are illustrated within the BSA 103b of the relay 107b. As such, STAs 106e-106f can associate with the relay 107a and perform wireless communications directly with the relay 107a. The relay 107a can form an association with the AP 104 and perform wireless communications with the AP 104 on behalf of the STA 106e-106f. Similarly, the STAs 106h-106i can associate with the relay 107b and perform wireless communications directly with the relay 107b. The relay 107b can form an association with the AP 104 and perform wireless communications with the AP 104 on behalf of the STA 106h-106i.

In some aspects, the STAs 106e-106f and the STAs 106h-106i can associate with the relays 107a-107b and send communications to and/or receive communications from the relays 107a-107b. In one aspect, information for associating is included in a beacon broadcast by the relays 107a-107b. The beacon signal can include the same service set identifier (SSID) as that used by an access point, such as the AP 104, with which the relay has formed an association. To receive the beacon, the STAs 106e-106f and 106h-106i can, for example, perform a broad coverage search over a coverage region. The STAs 106e-106f and 106h-106i can also perform a search by sweeping a coverage region in a lighthouse fashion, for example.

In an aspect, after the relay 107a and/or 107b has formed an association with the AP 104 and provided a beacon signal, one or more of the STAs 106e-106i can form an association with the relay 107a and/or 107b. In an aspect, one or more of the STAs 106e-106i can form an association with the relay 107a and/or 107b before the relay 107a and/or 107b has formed an association with the AP 104. After receiving the information for associating, the STAs 106e-106f and 106h-106i can transmit a reference signal, such as an association probe or request, to the relays 107a-107b. The relays 107a-107b can accept the association request and send an association reply to the STAs 106e-106f and 106h-106i. The STAs 106e-106f and 106h-106i can send and receive data with the relays 107a-107b. The relays 107a-107b can forward data received from the one or more STAs 106e-106f and 106h-106i to the AP 104 with which it has also formed an association. Similarly, when the relays 107a-107b receives data from the AP 104, the relays 107a-107b can forward the data received from the AP 104 to an appropriate STA 106e-106f or 106h-106i. By using the relay services of the relays 107a-107b, the STAs 106e-106f and 106h-106i can effectively communicate with the AP 104, despite being unable to directly communicate with the AP 104.

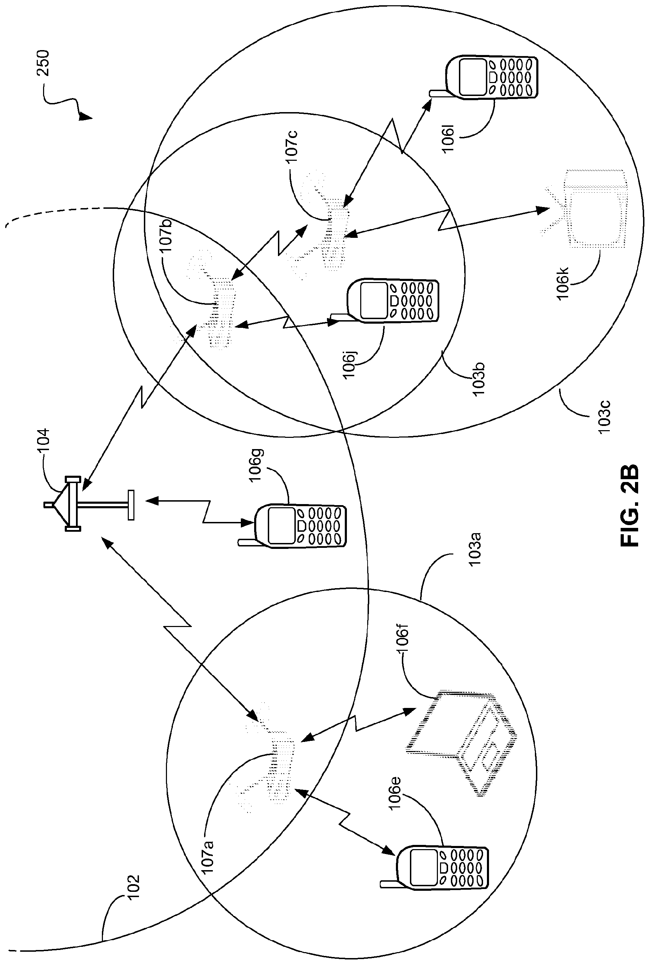

FIG. 2B shows another exemplary wireless communication system 250 in which aspects of the present disclosure can be employed. The wireless communication system 250 can also operate pursuant to a wireless standard, for example any one of the 802.11 standards. Similar to FIG. 2A, the wireless communication system 250 can include an AP 104, which communicates with wireless nodes including the relays 107a-107b and one or more STAs 106e-106g and 106j-1061. The relays 107a-107b can also communicate with wireless nodes such as some STAs 106. The wireless communication system 250 of FIG. 2B differs from the wireless communication system 200 of FIG. 2A in that the relays 107a-107b can also communicate with wireless nodes that are other relays, such as the relay 107c. As shown, the relay 107b is in communication with the relay 107c. The relay 107c can also communicate with the STAs 106k and 1061. The wireless communication system 250 can function in accordance with OFDM/OFDMA techniques or CDMA techniques.

As described above with respect to FIG. 2A, the AP 104 and relays 107a-107b can act as a base station and provide wireless communication coverage in a basic service area (BSA). As shown in FIG. 2B, the relay 107c can also act as a base station and provide wireless communication in a BSA. In the illustrated aspect, each of the AP 104 and the relays 107a-107c cover a basic service area 102 and 103a-103c, respectively. In an aspect, some STAs 106e-106g and 106j-1061 can be located within the AP's BSA 102 while other STAs can be located outside the AP's BSA 102. For example, the STA 106g can be located within the AP 104's BSA 102. As such, the STA 106g can associate with the AP 104 and perform wireless communications directly with the AP 104. Other STAs such as, for example, the STAs 106e-106f and the STAs 106j-1 can be outside the BSA 102 of the AP 104. The relays 107a-107b can be inside the BSA 102 of the AP 104. As such, the relays 107a-107b can associate with the AP 104 and perform wireless communications directly with the AP 104.

The relay 107c can be outside the BSA 102 of the AP 104. The relay 107c can be within the BSA 103b of the relay 107b. Therefore, the relay 107c can associate with the relay 107b and perform wireless communications with the relay 107b. The relay 107b can perform wireless communications with the AP 104 on behalf of the relay 107c. The STAs 106k-1061 can associate with the relay 107c. The STAs 106k-1061 can perform wireless communications via indirect communication with the AP 104 and the relay 107b via communication with the relay 107c.

To communicate with the relay 107c, the STAs 106k-1061 can associate with the relay 107c in a similar manner as the STAs 106e-f associate with the relay 107a, as described above. Similarly, the relay 107c can associate with the relay 107b in a similar manner as the relay 107b associates with the AP 104. Therefore, the wireless communication system 250 provides a multi-tiered topology of relays extending out from the AP 104 to provide wireless communications services beyond the BSA 102 of the AP 104. The STAs 106e-106g and 106j-1061 can communicate within the wireless communication system 250 at any level of the multi-tiered topology. For example, as shown, STAs can communicate directly with the AP 104, as shown by the STA 106g. STAs can also communicate at a "first tier" of relays, for example, as shown by the STAs 106e-f and 106j which communicate with relays 107a-107b respectively. STAs can also communicate at a second tier of relays, as shown by the STAs 106k-1061, which communicate with the relay 107c.

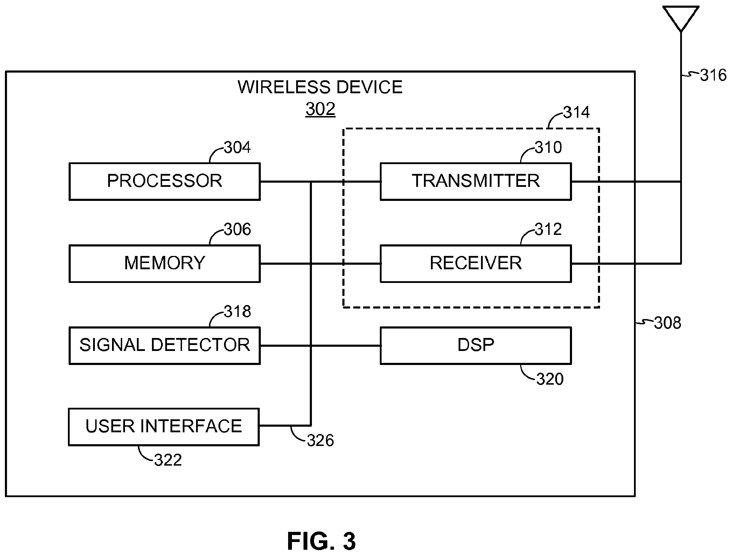

FIG. 3 shows an exemplary functional block diagram of a wireless device 302 that can be employed within the wireless communication systems 100, 200, and/or 250 of FIGS. 1, 2A, and/or 2B. The wireless device 302 is an example of a device that can be configured to implement the various methods described herein. For example, the wireless device 302 can include the AP 104, one of the STAs 106e-1061, and/or one of the relays 107a-107c.

The wireless device 302 can include a processor 304 configured to control operation of the wireless device 302. The processor 304 can also be referred to as a central processing unit (CPU). A memory 306, which can include both read-only memory (ROM) and/or random access memory (RAM), can provide instructions and data to the processor 304. A portion of the memory 306 can also include non-volatile random access memory (NVRAM). The processor 304 can perform logical and arithmetic operations based on program instructions stored within the memory 306. The instructions in the memory 306 can be executable to implement the methods described herein.

The processor 304 can include or be a component of a processing system implemented with one or more processors. The one or more processors can be implemented with any combination of general-purpose microprocessors, microcontrollers, digital signal processors (DSPs), field programmable gate array (FPGAs), programmable logic devices (PLDs), controllers, state machines, gated logic, discrete hardware components, dedicated hardware finite state machines, or any other suitable entities that can perform calculations or other manipulations of information.

The processing system can also include machine-readable media for storing software. Software shall be construed broadly to mean any type of instructions, whether referred to as software, firmware, middleware, microcode, hardware description language, or otherwise. Instructions can include code (e.g., in source code format, binary code format, executable code format, or any other suitable format of code). The instructions, when executed by the one or more processors, cause the processing system to perform the various functions described herein.

The wireless device 302 can also include a housing 308 that can include a transmitter 310 and/or a receiver 312 to allow transmission and reception of data between the wireless device 302 and a remote location. The transmitter 310 and receiver 312 can be combined into a transceiver 314. An antenna 316 can be attached to the housing 308 and electrically coupled to the transceiver 314. In an aspect, the antenna 316 can be within the housing 308. In various aspects, the wireless device 302 can also include multiple transmitters, multiple receivers, multiple transceivers, and/or multiple antennas.

The wireless device 302 can also include a signal detector 318 that can detect and quantify the level of signals received by the transceiver 314. The signal detector 318 can detect such signals as total energy, energy per subcarrier per symbol, power spectral density, and other signals. The wireless device 302 can also include a digital signal processor (DSP) 320 for use in processing signals. The DSP 320 can be configured to process packets for transmission and/or upon receipt. In some aspects, the packets can include a physical layer data unit (PPDU).

The wireless device 302 can further include a user interface 322, in some aspects. The user interface 322 can include a keypad, a microphone, a speaker, and/or a display. The user interface 322 can include any element or component that conveys information to a user of the wireless device 302 and/or receives input from the user.

The various components of the wireless device 302 can be coupled together by a bus system 326. The bus system 326 can include a data bus, for example, as well as a power bus, a control signal bus, and a status signal bus in addition to the data bus. Those of skill in the art will appreciate the components of the wireless device 302 can be coupled together or accept or provide inputs to each other using some other mechanism.

Although a number of separate components are illustrated in FIG. 3, those of skill in the art will recognize that one or more of the components can be combined or commonly implemented. For example, the processor 304 can be used to implement not only the functionality described above with respect to the processor 304, but also to implement the functionality described above with respect to the signal detector 318 and/or the DSP 320. Further, each of the components illustrated in FIG. 3 can be implemented using a plurality of separate elements.

The wireless device 302 can include an AP 104, a STA 106e-1061, or a relay 107a-107c, and can be used to transmit and/or receive communications. That is, any of the AP 104, the STAs 106e-1061, or the relays 107a-107c, can serve as transmitter or receiver devices. Certain aspects contemplate the signal detector 318 being used by software running on memory 306 and processor 304 to detect the presence of a transmitter or receiver.

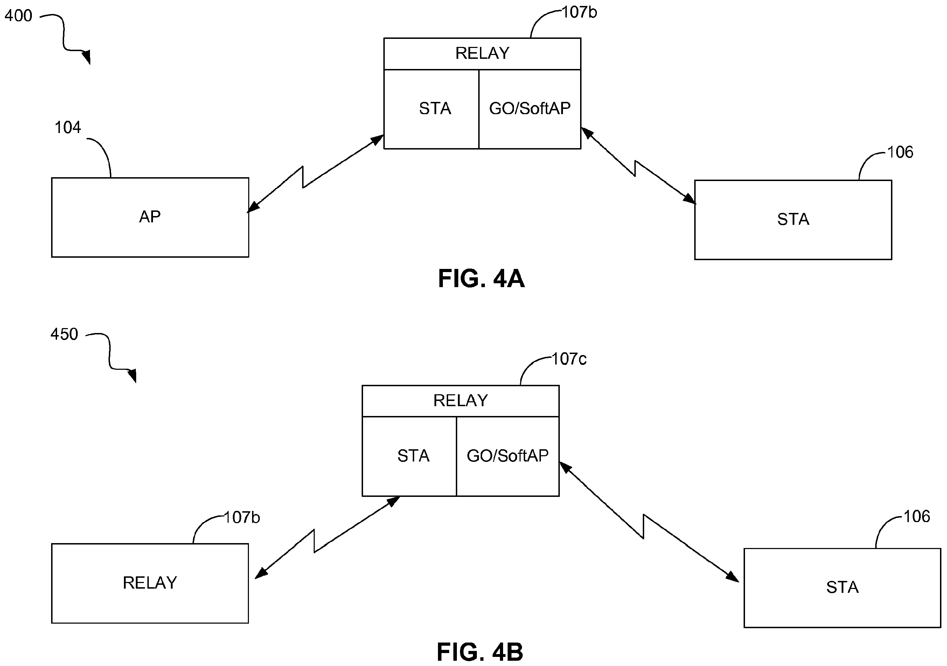

FIG. 4A illustrates a wireless communications system 400, according to an aspect. The wireless communications system 400 includes an AP 104, a station (STA) 106, and a relay 107b. Note that while only one STA 106 and only one relay 107b are illustrated, the wireless communications system 400 can include any number of STAs and relays. In some aspects, the AP 104 can be outside the transmission range of the STA 106. In some aspects, the STA 106 can also be outside the transmission range of the AP 104. In these aspects, the AP 104 and the STA 106 can communicate with the relay 107, which can be within the transmission range of both the AP 104 and STA 106. In some aspects, both the AP 104 and STA 106 can be within the transmission range of the relay 107b.

In some implementations, the relay 107b can communicate with the AP 104 in the same manner as a STA would communicate with the AP. In some aspects, the relay 107b can implement a WI-FI DIRECT™ point-to-point group owner capability or a software-enabled access point ("SoftAP") capability. In some aspects, a relay 107b can associate with the AP 104 and send communications to and/or receive communications from the AP 104. In one aspect, information for associating is included in a beacon signal broadcast by the AP 104. To receive such a beacon, the relay 107b can, for example, perform a broad coverage search over a coverage region. The relay 107b can also perform a search by sweeping a coverage region in a lighthouse fashion, for example. After receiving the information for associating, the relay 107b can transmit a reference signal, such as an association probe or request, to the AP 104. In an aspect, the relay 107b can utilize a first station address when exchanging network messages with the AP 104.

Similarly, the STA 106 can associate with the relay 107b as if it were an AP. In some aspects, the STA 106 can associate with the relay 107b and send communications to and/or receive communications from the relay 107b. In one aspect, information for associating is included in a beacon broadcast by the relay 107b. After receiving the information for associating, the STA 106 can transmit a reference signal, such as an association probe or request, to the relay 107b. In one aspect, the relay 107b can utilize a second station address that is different than the first station address when exchanging network messages with one or more stations.

FIG. 4B illustrates a wireless communications system 450, according to another aspect. The wireless communications system 450 includes a relay 107b, a relay 107c, and a station (STA) 106. Note that while only one STA 106 and only two relays 107b-107c are illustrated, the wireless communications system 450 can include any number of STAs and relays.

In some disclosed implementations, the relay 107c can communicate with the relay 107b in the same manner as a station would communicate with an AP. In some aspects, the relay 107c can implement WI-FI DIRECT™ point-to-point group owner capability or SoftAP capability. In some aspects, the relay 107c can associate with the relay 107b and send communications to and/or receive communications from the relay 107b. In one aspect, information for associating is included in a beacon signal broadcast by the relay 107b. To receive such a beacon, the relay 107c can, for example, perform a broad coverage search over a coverage region. A search can also be performed by the relay 107c by sweeping a coverage region in a lighthouse fashion, for example. After receiving the information for associating, the relay 107c can transmit a reference signal, such as an association probe or request, to the relay 107b. In an aspect, the relay 107c can utilize a first station address when exchanging network messages with the relay 107b.

Similarly, the STA 106 can associate with the relay 107c as if it were an AP. In some aspects, the STA 106 can associate with the relay 107c and send communications to and/or receive communications from the relay 107c. In one aspect, information for associating is included in a beacon broadcast by the relay 107c. After receiving the information for associating, the STA 106 can transmit a reference signal, such as an association probe or request, to the relay 107c. In one aspect, the relay 107c can utilize a second station address that is different than the first station address when exchanging network messages with one or more stations.

In some aspects, a relay (such as the relay 107c) may not activate a SoftAP when it is not associated with a parent relay AP (such as the relay 107b).

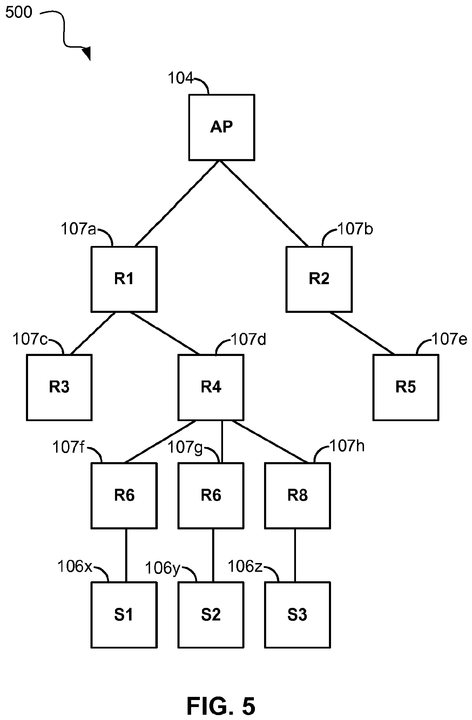

FIG. 5 illustrates a wireless communications system 500, according to another aspect. The wireless communications system 500 includes a plurality of nodes, including the AP 104, relays 107a-107h, and STAs 106x-106z. In an aspect, the wireless communications system 500 can be a multi-hop mesh network, as described above with respect to FIGS. 2A-2B.

As shown in FIG. 5A, the STAs 106x-106z associate with the AP 104 through the relays 107f-107h, respectively. In turn, the relays 107f-107h associate with the AP 104 through the relay 107d. The relays 107c-107d associate with the AP 104 through the relay 107a, and the relay 107e associates with the AP 104 through the relay 107b. The relays 107a-107b associate directly with the AP 104. In various aspects, additional APs, STAs, and/or relays (not shown) can be included in the wireless communications system 500, and some APs, STAs, and/or relays can be omitted.

Each node that associates with another node can be referred to as a "child" of that "parent" node. In other words, a parent node acts as a next immediate AP to its child node, and a child node directly associates with its parent node, with no intervening nodes. Children of a node, and successive children of the children, can be referred to as "descendant" nodes. Parents of a node, and successive parents of the parent, can be referred to as "ancestor" nodes. Nodes with no parents can be referred to as "root" nodes, which can be parent nodes themselves. Nodes with no children can be referred to as "leaf' nodes. As shown in FIG. 5, the AP 104 is a root node, and the relays 107c and 107e, and the STAs 106x-106z, are leaf nodes. Nodes with both parent nodes and child nodes can be referred to as intermediate nodes. As shown in FIG. 5, the relays 107a-107b, 107d, and 107f-107h are intermediate nodes.

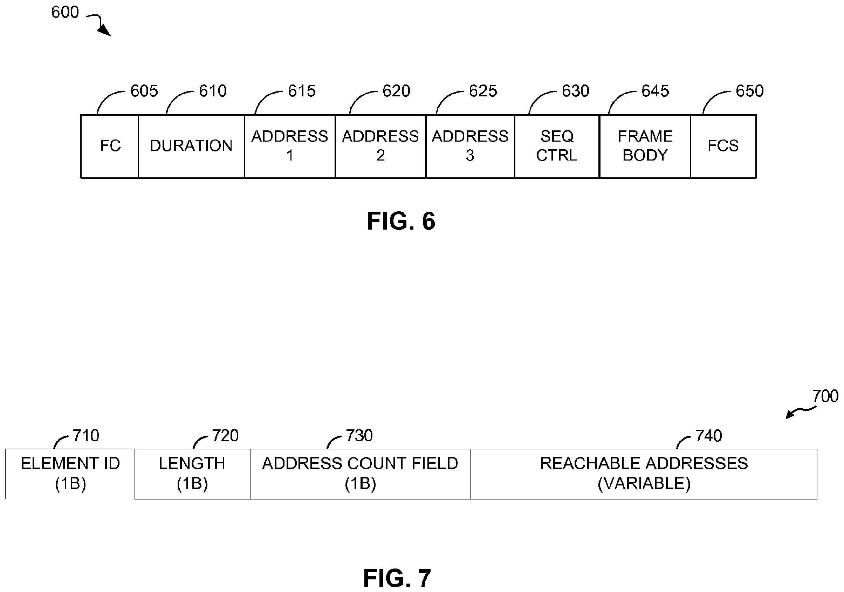

As discussed in greater detail herein with respect to FIGS. 6-8, in various aspects, a relay node can communicate information regarding one or more of its descendant nodes to one or more of its ancestor nodes. In some aspects, a relay node can communicate information indicating a state, capability, or change in state or capability for one or more descendant nodes. For example, in the illustrated aspect of FIG. 5, the STA 106z can associate with the relay 107h. In response to the association, the relay 107h can generate a list of reachable addresses, and can transmit the list of reachable addresses to its parent node 107d.

As another example, the relay 107d can associate with the relay 107a. In response to the association, the relay 107d can generate state/capability information for one or more of its descendant nodes 107f-107h and 106x-106z, and can transmit the state/capability information to its parent node 107a. For example, the relay 107d can inform the relay 107a that the nodes 107f-107h are capable of and acting as relays, and that the nodes 106x-106z are not acting as relays. Similarly, the relay 107a can provide at least a portion of this information to the AP 104. In various aspects, information can be provided in one or more management frames.

FIG. 6 shows an exemplary management frame 600 format. As discussed above, one or more messages in the wireless communication system 200, 250, 400, 450, and/or 500, described above with respect to FIGS. 2A, 2B, 4A, 4B, and 5, respectively, can include the management frame 600. For example, in various aspects, the management frame 600 can include an association request, an association response, a probe request, or a probe response. In the illustrated aspect, the management frame 600 includes frame control (FC) field 605, a duration field 610, a first address field 615, a second address field 620, a third address field 625, a sequence control field 630, a frame body 645, and a frame check sequence (FCS) 650. A person having ordinary skill in the art will appreciate that the management frame 600 can include additional fields, and fields can be rearranged, removed, and/or resized.

As discussed above with respect to FIG. 5, the frame body 645 can include information indicating a state, capability, or change in state or capability for one or more descendants of an apparatus generating the frame 600. For example, in various aspects described below with respect to FIGS. 7-8, the frame body 645 can include one or more information elements (IEs). In various aspects, information elements can include a list of reachable addresses, flags indicating changes in state or capability, and/or flags indicating state or capability of descendant nodes.

FIG. 7 shows an exemplary relay information element 700. This relay information element 700 can include information about addresses that can be reached through a transmitting node, to enhance network routing in implementations described herein. One or more messages in the wireless communication system 200, 250, 400, 450, and/or 500, described above with respect to FIGS. 2A, 2B, 4A, 4B, and 5, respectively, can include the relay information element 700 such as, for example, an association request, an association response, a probe request, and/or a probe response. For example, the management frame 600 described above with respect to FIG. 6 can include the information element 700. In the illustrated aspect, the management frame 600 includes an element identification (ID) 710, a length field 720, an address count field 730, and a list of reachable addresses 740. A person having ordinary skill in the art will appreciate that the relay information element 700 can include additional fields, and fields can be rearranged, removed, and/or resized.

The element identifier field 710 can include a value which identifies the element as a relay element 700. The element identifier field 710 shown is one octet long. In some implementations, the element identifier field 710 can be two, five, or twelve octets long. In some implementations, the element identifier field 710 can be of variable length, such as varying length from signal to signal and/or as between service providers.

The length field 720 can be used to indicate the length of the relay element 700 or the combined length of the address count field 730 and the list of reachable addresses 740. The length field 720 shown in FIG. 7 is one octet long. In some implementations, the length field 720 can be two, five, or twelve octets long. In some implementations, the length field 720 can be of variable length, such as varying length from signal to signal and/or as between service providers.

The address count field 730 can indicate the number of addresses contained in the reachable addresses field 740. The address count field 730 shown in FIG. 7 is a one octet field. In some implementations, the address count field 730 can be two, four, or twelve octets. In some implementations, the address count field 730 can be of variable length, such as from signal to signal and/or as between service providers. A value of zero can indicate that no reachable addresses are included in the information element 700.

The reachable addresses field 740 can indicate a list of the addresses, such as media access control (MAC) addresses, that can be reached through the transmitting relay node. The reachable addresses field 740 shown in FIG. 7 is a variable length field. In an aspect, the reachable addresses field 740 can be n times 6 octets in length, where n is the value specified in the address count field 740.

As discussed above, the relay information element 700 can be included in an association request, an association response, a probe request, and/or a probe response. In some aspects, the relay information element 700 can be included in an action frame such as a reachable address update frame. In this case, a category of the action frame can be "relay action."

In various aspects, a relay can transmit the information element 700 to a parent node in order to inform the parent node of changes to the list of reachable addresses 740. For example, referring also to FIG. 5, the relay 107h can associate with the relay 107d. In response to the association, the relay 107d can generate the information element 700 including the addresses of each descendant node 107f-107h and 106x-106z. The relay 107d can transmit the information element 700 to its parent relay 107a.

Likewise, the relay 107a can incorporate the reachable address list received from the relay 107d into its own reachable address list. Thus, the relay 107a can generate another information element 700 including the addresses of each descendant node 107c, 107f-107h, and 106x-106z. The relay 107a can transmit the information element 700 to the AP 104, thereby propagating changes to the network 500 upstream.

In various aspects, the operation described above with respect to the information element 700 can generate excess network traffic. In some aspects, it can be desirable to transmit information regarding only a subset of descendant nodes. In various aspects, for example, a relay node can transmit information regarding only descendant nodes for which an update in state or capability is requested.

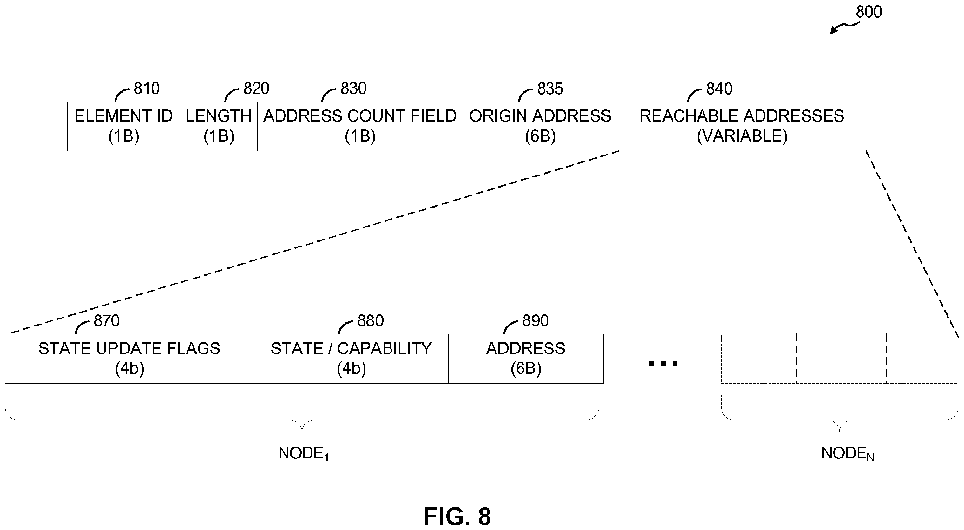

FIG. 8 shows an exemplary efficient relay information element 800. Like the relay information element 700 discussed above with respect to FIG. 7, the efficient relay information element 800 can include information about addresses that can be reached through a transmitting node. In various aspects, the efficient relay information element 800 can be shorter than the relay information element 700. One or more messages in the wireless communication system 200, 250, 400, 450, and/or 500, described above with respect to FIGS. 2A, 2B, 4A, 4B, and 5, respectively, can include the efficient relay information element 800 such as, for example, an association request, an association response, a probe request, and/or a probe response.

For example, the management frame 600 described above with respect to FIG. 6 can include the efficient relay information element 800. In the illustrated aspect, the management frame 600 includes an element identification (ID) 810, a length field 820, an address count field 830, an origin address field 835, and a list of reachable addresses 840. A person having ordinary skill in the art will appreciate that the efficient relay information element 800 can include additional fields, and fields can be rearranged, removed, and/or resized. For example, in some aspects, the origin address field 835 can be omitted.

The element identifier field 810 can include a value which identifies the element as a relay element 800. The element identifier field 810 shown is one octet long. In some implementations, the element identifier field 810 can be two, five, or twelve octets long. In some implementations, the element identifier field 810 can be of variable length, such as varying length from signal to signal and/or as between service providers.

The length field 820 can be used to indicate the length of the relay element 800 or the combined length of the address count field 830 and the list of reachable addresses 840. The length field 820 shown in FIG. 8 is one octet long. In some implementations, the length field 820 can be two, five, or twelve octets long. In some implementations, the length field 820 can be of variable length, such as varying length from signal to signal and/or as between service providers.

The address count field 830 can indicate the number of addresses contained in the reachable addresses field 840. The address count field 830 shown in FIG. 8 is a one octet field. In some implementations, the address count field 830 can be two, four, or twelve octets. In some implementations, the address count field 830 can be of variable length, such as from signal to signal and/or as between service providers. A value of zero can indicate that no reachable addresses are included in the efficient relay information element 800.

The origin address field 835 can indicate the address of the original node generating the efficient relay information element 800. For example, with reference to FIG. 5, the relay 107h can associate with the relay 107d. In response to the association, the relay 107d can generate the efficient relay information element 800 including information indicating that the relay 107h has associated with the relay 107d. Thus, the relay 107d can include its address in the origin address field 835.

The relay 107d can transmit the efficient relay information element 800 to its parent node 107a. In response to receiving the efficient relay information element 800, the relay 107a can generate a forwarding information element, including the origin address field 835 indicating the address of the relay 107d. The relay 107a can provide the forwarding information element to the AP 104. In some aspects, the relay 107a can forward the efficient relay information element 800, received from the relay 107d, unchanged. The AP 104 (or any other node) can use the origin address field 835 in order to determine a node hierarchy of the network.

The origin address field 835 shown in FIG. 8 is a six octet field. In some implementations, the origin address field 835 can be four, eight, or twelve octets. In some implementations, the origin address field 835 can be of variable length, such as from signal to signal and/or as between service providers.

The reachable addresses field 840 can indicate a list of the addresses, such as media access control (MAC) addresses, that can be reached through the transmitting relay node. In an aspect, the list can be a partial list, including only a subset of reachable addresses. For example, the reachable addresses field 840 can include information indicating a state, capability, or change in state or capability for only descendant nodes for which an update is requested. The reachable addresses field 840 shown in FIG. 8 is a variable length field. In an aspect, the reachable addresses field 840 can be n times 7 octets in length, where n is the value specified in the address count field 840.

In various aspects, each reachable address in the list of reachable addresses 840 can include one or more state update flags 870, one or more state and/or capability indicators 880, and a reachable address 890 to which the flags 870 and indicators 880 apply. A person having ordinary skill in the art will appreciate that each reachable address in the list of reachable addresses 840 can include additional fields, and fields can be rearranged, removed, and/or resized.

The state update flags 870 can indicate a change in state, or a request to update an unchanged state, for a node having the address 890. In various aspects, the state update flags 870 can include one or more of: an indication that the node having the address 890 has associated with the network, an indication that the node having the address 890 has left the network, an indication that the node having the address 890 has changed its behavior as a relay or non-relay, an indication that the node having the address 890 has changed its behavior from a relay to a non-relay, an indication that the node having the address 890 has changed its behavior from a non-relay to a relay, an indication that the node having the address 890 was previously associated with a newly associated relay node, and is now part of the network, etc.

The state update flags 870 shown in FIG. 8 form a four-bit field. In some implementations, the state update flags 870 can be two, six, or eight bits long. In some implementations, the state update flags 870 can be of variable length, such as from signal to signal and/or as between service providers.

The state/capability indicators 880 can indicate a state or a capability for a node having the address 890. In various aspects, the state/capability indicators 880 can include one or more of: an indication that the node having the address 890 is operating as a relay, an indication that the node having the address 890 is operating as a non-relay, an indication that the node having the address 890 is capable of operating as a relay, an indication that the node having the address 890 is not capable of operating as a relay, an indication that the node having the address 890 has descendant nodes, an indication of the number of descendants for the node having the address 890, a hop count to the node having the address 890, an indication that the node generating the efficient relay information element 800 is the parent of the node having the address 890, etc.

In aspects where the state/capability indicators 880 include a hop count, each relay that forwards the efficient relay information element 800 can increment the hop count (which can start at 0 for when the originating node generates the efficient relay information element 800). The state/capability indicators 880 shown in FIG. 8 form a four-bit field. In some implementations, the state/capability indicators 880 can be two, six, or eight bits long. In some implementations, the state/capability indicators 880 can be of variable length, such as from signal to signal and/or as between service providers.

As discussed above, the efficient relay information element 800 can be included in an association request, an association response, a probe request, and/or a probe response. In some aspects, the efficient relay information element 800 can be included in an action frame such as a reachable address update frame. In this case, a category of the action frame can be "relay action."

In various aspects, a relay can transmit the efficient relay information element 800 to a parent node in order to inform the parent node of changes to the list of reachable addresses 840. For example, referring also to FIG. 5, the relay 107h can associate with the relay 107d. In response to the association, the relay 107d can generate the efficient relay information element 800 including the addresses of only the descendant nodes 107h and 106z. In various aspects, the relay 107d can set a flag indicating that the descendant node 107h has associated with the network, and can set a flag indicating that the node 106z was previously associated with the descendant node 107h and is now associated with the network. The relay 107d can set a flag indicating that the node 107h is acting as a relay, a flag indicating that the node 107h is capable of acting as a relay, a flag indicating that the node 106z is not acting as a relay, and a flag indicating that the node 106z is capable of acting as a relay.

The relay 107d can transmit the efficient relay information element 800 to its parent relay 107a. Likewise, the relay 107a can generate another message forwarding the efficient relay information element 800 to the AP 104, thereby propagating changes to the network 500 upstream. In some aspects, the relay 107a can increment a hop count in the process of forwarding the efficient relay information element 800.

In various aspects, nodes can generate a single efficient relay information element 800 in response to a single update event such as, for example, association of a child node, disassociation of a child node, receiving an efficient relay information element 800 from a child node, etc. In various aspects, nodes can aggregate information elements 800 in a single management frame, such as the frame 600 discussed above with respect to FIG. 6. For example, the relay 107a can receive an efficient relay information element 800 from both the relay 107d and from the relay 107c. The relay 107a can aggregate the information elements into a single management frame for transmission to the AP 104.

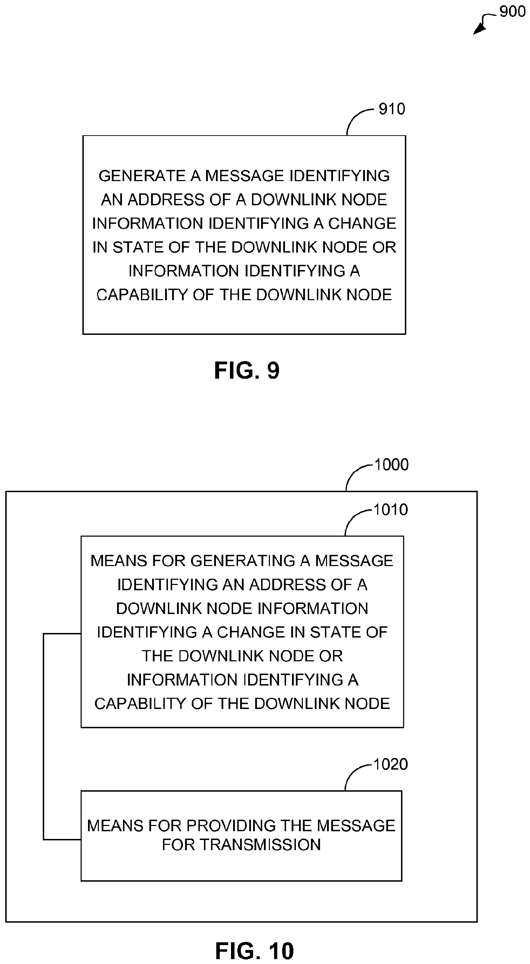

FIG. 9 is a flowchart 900 of an exemplary method of communicating in a wireless network. For example, the method of the flowchart 900 can be implemented within the wireless communication system 200, 250, 400, 450, and/or 500, described above with respect to FIGS. 2A, 2B, 4A, 4B, and 5, respectively. Particularly, the method of the flowchart 900 can be implemented by one or more of the AP 104 and the relays 107a-107h. Although the method of the flowchart 900 is described herein with particular reference to the wireless device 302, discussed above with respect to FIG. 3, the wireless communication system 500, discussed above with respect to FIG. 5, and the efficient relay information element 800, discussed above with respect to FIG. 8, a person having ordinary skill in the art will appreciate that the method of flowchart 900 can be implemented with any other suitable device or format. In an aspect, the steps in the flowchart 900 can be performed by a processor or controller, such as the processor 304 or the DSP 320 in conjunction with one or more of the memory 306, the transmitter 310, and the receiver 312, described above with respect to FIG. 3. Although the method of the flowchart 900 is described herein with reference to a particular order, in various aspects, blocks herein can be performed in a different order, or omitted, and additional blocks can be added.

First, at block 910, the wireless device 302 generates a message identifying an address of a descendant node and information identifying a change in state of the descendant node or information identifying a capability of the descendant node. The wireless device 302 is communicatively coupled with the descendant node. For example, the relay 107d can generate the efficient relay information element 800 including an address 890 of a descendant node 107h. The efficient relay information element 800 can include one or more state update flags 870 and/or one or more state/capability indicators 880 for the descendant node 107h.

In various aspects, the information identifying the change in state of the descendant node can further include one or more flags indicating: whether or not the descendant node has associated with the apparatus or a descendant of the apparatus, whether or not the descendant node has disassociated from the apparatus or a descendant of the apparatus, whether or not the descendant node has changed behavior from a relay to a non-relay node, or whether or not the descendant node has changed behavior from a non-relay to a relay node. For example, the relay 107d can determine that the relay 107h has associated with the relay 107d. The relay 107d can generate the efficient relay information element 800 including a state update flag 870 indicating that the relay 107h has associated with the relay 107d.

In various aspects, the wireless device can determine the change in state of the descendant node based on an indication in an association request frame, a probe request frame, a disassociation frame, or a relay update notification, wherein the generation of the message is based on the determination. For example, the relay 107h can transmit an association request to the relay 107d. Thus, the relay 107d can determine that the relay 107h has a change in state based on the association.

In various aspects, the information identifying the capability of the descendant node can further include one or more flags indicating: whether or not the descendant node is capable of acting as a relay, whether or not the descendant node is acting as a relay, or whether or not the descendant node is capable of acting as a relay and is not acting as a relay. For example, the relay 107d can determine that the relay 107h is capable of acting as a relay node. The relay 107d can generate the efficient relay information element 800 including a state/capability indicator 880 indicating that the relay 107h is capable of acting as a relay.

In various aspects, the wireless device can determine the capability of the descendant node based on an indication in an association request frame, a probe request frame, a disassociation frame, or a relay update notification, wherein the generation of the message is based on the determination. For example, the relay 107h can transmit to the relay 107d an association request including an indication that the relay 107h is capable of and is acting as a relay. Thus, the relay 107d can determine that the relay 107h is capable of and is acting as a relay.

In various aspects, the wireless device 302 can receive an update from a child node of the apparatus, generate the message based on the update, and provide the message to a parent node of the apparatus. For example, the relay 107a can receive a management frame 600 including an efficient relay information element 800 from its child node 107d. The efficient relay information element 800 can be formatted as discussed above. The relay 107a can generate a new management frame 600 including the efficient relay information element 800. The relay 107a can transmit the new management frame 600 to the AP 104, thereby forwarding the update received from the relay 107d.

In various aspects, the wireless device 302 can increment a hop count of the update when generating the message based on the update. For example, the relay 107a can increment a hop count contained in a state/capability field 880 of an efficient relay information element 800 received from the relay 107d. In an aspect, the wireless device 302 can set the hop count to zero when the wireless device 302 originates the efficient relay information element 800.

In various aspects, the wireless device 302 can encapsulate the message in at least one of: a reachable address update frame, a probe request frame, or an association request frame. For example, the relay 107d can generate a management frame 600 having a frame type of reachable address update frame, probe request frame, or association request frame. The relay 107d can generate the management frame 600 including the efficient relay information element 800.

In various aspects, the wireless device 302 can generate the message including a source address of the wireless device 302. For example, the relay 107d can generate the efficient relay information element 800 including the origin address 835. The relay 107a, can forward the efficient relay information element 800 to the AP 104 including the same origin address 835 of the relay 107d.

FIG. 10 is a functional block diagram of a wireless device 1000, in accordance with an exemplary aspect of the invention. Those skilled in the art will appreciate that a wireless power apparatus can have more components than the simplified wireless device 1000 shown in FIG. 10. The wireless device 1000 shown includes only those components useful for describing some prominent features of implementations within the scope of the claims. The wireless device 1000 includes means 1010 for generating a message identifying an address of the descendant node information identifying a change in state of the descendant node or information identifying a capability of the descendant node, and means 1020 for providing the message for transmission.

In an aspect, the means 1010 for generating can be configured to perform one or more of the functions described above with respect to block 910 (FIG. 9). In various aspects, the means 1010 for generating can be implemented by one or more of the processor 304 (FIG. 3), and the memory 306 (FIG. 3). For example, the processor 304 can retrieve an address of a descendant node from the memory 306, and can concatenate the address 890 with the state update flags 870 and/or the state/capability indicators 880 described above with respect to FIG. 8. The processor 304 can store the information element 800 in the memory 306.

In an aspect, the means 1020 for providing the message for transmission can be configured to perform one or more of the functions described above with respect to block 920 (FIG. 9). In various aspects, the means 1020 for providing the message for transmission can be implemented by one or more of the transmitter 310 (FIG. 3), the transceiver 314 (FIG. 3), the DSP 320 (FIG. 3), and the antenna 316 (FIG. 3). For example, the processor 304 can retrieve the information element 800 from the memory 306, can encode the information element 800 for transmission, and can provide the encoded information element 800 to the transmitter 310. The transmitter 310 can transmit the information element 800 via the antenna 316.

In an aspect, the wireless device 1000 can further include means for determining a change in status of the descendant node. In various aspects, the means for determining can be implemented by one or more of the processor 304 (FIG. 3), and the memory 306 (FIG. 3). For example, the processor 304 can determine the change in status based on an indication in an association request frame, a probe request frame, a disassociation frame, or a relay update notification.

In an aspect, the wireless device 1000 can further include means for determining a change in capability of the descendant node. In various aspects, the means for determining can be implemented by one or more of the processor 304 (FIG. 3), and the memory 306 (FIG. 3). For example, the processor 304 can determine the change in capability based on an indication in an association request frame, a probe request frame, a disassociation frame, or a relay update notification.

In an aspect, the wireless device 1000 can further include means for receiving an update from a child node of the apparatus. In various aspects, the means for determining can be implemented by one or more of the receiver 312 (FIG. 3), the transceiver 314 (FIG. 3), the antenna 316 (FIG. 3), processor 304 (FIG. 3), and the memory 306 (FIG. 3). For example, the processor 304 can receive the update via the receiver 312 and the antenna 316.

In an aspect, the wireless device 1000 can further include means for generating the message based on the update. In various aspects, the means for generating can be implemented by one or more of the processor 304 (FIG. 3), and the memory 306 (FIG. 3).

In an aspect, the wireless device 1000 can further include means for providing the message to a parent node of the apparatus. In various aspects, the means for providing can be implemented by one or more of the transmitter 310 (FIG. 3), the transceiver 314 (FIG. 3), the DSP 320 (FIG. 3), and the antenna 316 (FIG. 3). For example, the processor 304 can retrieve the message from the memory 306, can encode the message for transmission, and can provide the encoded message to the transmitter 310. The transmitter 310 can transmit the information element 800 via the antenna 316.

In an aspect, the wireless device 1000 can further include means for incrementing a hop count of the update when generating the message based on the update. In various aspects, the means for incrementing can be implemented by one or more of the processor 304 (FIG. 3), and the memory 306 (FIG. 3).

In an aspect, the wireless device 1000 can further include means for encapsulating the message in at least one of: a reachable address update frame, a probe request frame, or an association request frame. In various aspects, the means for encapsulating can be implemented by one or more of the processor 304 (FIG. 3), and the memory 306 (FIG. 3).

In an aspect, the wireless device 1000 can further include means for including a source address of the apparatus in the message. In various aspects, the means for including can be implemented by one or more of the processor 304 (FIG. 3), and the memory 306 (FIG. 3).

As used herein, the term "determining" encompasses a wide variety of actions. For example, "determining" can include calculating, computing, processing, deriving, investigating, looking up (e.g., looking up in a table, a database or another data structure), ascertaining and the like. Also, "determining" can include receiving (e.g., receiving information), accessing (e.g., accessing data in a memory) and the like. Also, "determining" can include resolving, selecting, choosing, establishing and the like. Further, a "channel width" as used herein can encompass or can also be referred to as a bandwidth in certain aspects.

As used herein, a phrase referring to "at least one of' a list of items refers to any combination of those items, including single members. As an example, "at least one of: *a, b,* or *c*" is intended to cover: *a, b, c, a-b, a-c, b-c,* and *a-b-c.*

The various operations of methods described above can be performed by any suitable means capable of performing the operations, such as various hardware and/or software component(s), circuits, and/or module(s). Generally, any operations illustrated in the Figures can be performed by corresponding functional means capable of performing the operations.

The various illustrative logical blocks, modules and circuits described in connection with the present disclosure can be implemented or performed with a general purpose processor, a digital signal processor (DSP), an application specific integrated circuit (ASIC), a field programmable gate array signal (FPGA) or other programmable logic device (PLD), discrete gate or transistor logic, discrete hardware components or any combination thereof designed to perform the functions described herein. A general purpose processor can be a microprocessor, but in the alternative, the processor can be any commercially available processor, controller, microcontroller or state machine. A processor can also be implemented as a combination of computing devices, e.g., a combination of a DSP and a microprocessor, a plurality of microprocessors, one or more microprocessors in conjunction with a DSP core, or any other such configuration.

In one or more aspects, the functions described can be implemented in hardware, software, firmware, or any combination thereof. If implemented in software, the functions can be stored on or transmitted over as one or more instructions or code on a computer-readable medium. Computer-readable media includes both computer storage media and communication media including any medium that facilitates transfer of a computer program from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Thus, in some aspects computer readable medium can include non-transitory computer readable medium (e.g., tangible media). In addition, in some aspects computer readable medium can include transitory computer readable medium (e.g., a signal). Combinations of the above should also be included within the scope of computer-readable media.

The methods disclosed herein include one or more steps or actions for achieving the described method. The method steps and/or actions can be interchanged with one another without departing from the scope of the claims. In other words, unless a specific order of steps or actions is specified, the order and/or use of specific steps and/or actions can be modified without departing from the scope of the claims.

The functions described can be implemented in hardware, software, firmware or any combination thereof. If implemented in software, the functions can be stored as one or more instructions on a computer-readable medium. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray® disc where disks usually reproduce data magnetically, while discs reproduce data optically with lasers.

Thus, certain aspects can include a computer program product for performing the operations presented herein. For example, such a computer program product can include a computer readable medium having instructions stored (and/or encoded) thereon, the instructions being executable by one or more processors to perform the operations described herein. For certain aspects, the computer program product can include packaging material.

Software or instructions can also be transmitted over a transmission medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of transmission medium.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

It is to be understood that the claims are not limited to the precise configuration and components illustrated above. Various modifications, changes and variations can be made in the arrangement, operation and details of the methods and apparatus described above without departing from the scope of the claims.

While the foregoing is directed to aspects of the present disclosure, other and further aspects of the disclosure can be devised without departing from the basic scope thereof, and the scope thereof is determined by the claims that follow.

## Claims

1. A method (900) of providing information in a wireless network (100, 200, 250, 400, 450, 500), comprising:
generating (910), by an apparatus being communicatively coupled with a descendant node in a multi-tiered topology, the descendant node being a child node or successive child node to the apparatus, a message (600, 700) identifying:
an address of the descendant node; and
information identifying a change in state of the descendant node or information identifying a capability of the descendant node; and **characterized by**
encapsulating the message in at least one of: a probe request frame, an association request frame, or an action frame of a member of the IEEE 802.11 family of wireless protocols.

2. The method of Claim 1, further comprising:
determining the change in state of the descendant node based on an indication in an association request frame, a probe request frame, a disassociation frame, or a relay update notification,
wherein the generation of the message is based on the determination.

3. The method of Claim 1, wherein information identifying the change in state of the descendant node comprises one or more flags indicating: whether or not the descendant node has associated with the apparatus or a descendant of the apparatus, whether or not the descendant node has disassociated from the apparatus or a descendant of the apparatus, whether or not the descendant node has changed behavior from a relay to a non-relay node, or whether or not the descendant node has changed behavior from a non-relay to a relay node.

4. The method of Claim 1, wherein generating the message comprises:
receiving an update from the child node of the apparatus;
generating the message based on the update; and
providing the message to a parent node of the apparatus, wherein the parent node acts as a next immediate access point for the apparatus.

5. The method of Claim 4, further comprising incrementing a hop count of the update message when generating the message based on the update.

6. The method of Claim 1, wherein generating the message comprises including a source address of the apparatus in the message.

7. The method of Claim 1, further comprising upon receiving a message indicating the change in state, updating routing information for the descendant node.

8. An apparatus for providing information in a wireless network (100, 200, 250, 400, 450, 500), the apparatus comprising:
means for generating (1010) a message (600, 700) identifying:
an address of a descendant node communicatively coupled with the apparatus, the descendant node being a child node or successive child node to the apparatus; and
information identifying a change in state of the descendant; and
means for providing the message for transmission; and **characterized by**
means for encapsulating the message in at least one of: a probe request frame, or an association request frame or an action frame of a member of the IEEE 802.11 family of wireless protocols.

9. The apparatus of Claim 8, further comprising:
means for determining a change in state of the descendant node based on an indication in an association request frame, a probe request frame, a disassociation frame, or a relay update notification,
wherein the generation of the message is based on the determination.

10. The apparatus of Claim 8, wherein information identifying the change in state of the descendant node comprises one or more flags indicating: whether or not the descendant node has associated with the apparatus or a descendant of the apparatus, whether or not the descendant node has disassociated from the apparatus or a descendant of the apparatus, whether or not the descendant node has changed behavior from a relay to a non-relay node, or whether or not the descendant node has changed behavior from a non-relay to a relay node.

11. The apparatus of Claim 8, wherein means for generating the message comprises:
means for receiving an update from a child node of the apparatus;
means for generating the message based on the update; and
means for providing the message to a parent node of the apparatus.

12. The apparatus of Claim 11, further comprising means for incrementing a hop count of the update message when generating the message based on the update.

13. The apparatus of Claim 8, wherein means for generating the message comprises means for including a source address of the apparatus in the message.

14. A wireless node comprising the apparatus of claim 8, and further comprising:
a transmitter configured to transmit the message.

15. A computer-readable medium having instructions stored thereon, the instructions being executable by one or more processors to perform the method of any of claims 1-7.

## Patentansprüche

1. Ein Verfahren (900) zum Vorsehen von Information in einem Drahtlosnetzwerk (100, 200, 250, 400, 450, 500), das Folgendes aufweist:
Generieren (910), durch eine Vorrichtung, die kommunikativ mit einem Descendant-Node bzw. nachgeordneten Knoten in einer mehrstufigen Topologie gekoppelt ist, wobei der nachgeordnete Knoten ein Child- bzw. Kind-Knoten oder ein nachfolgender Child-Knoten hinsichtlich der Vorrichtung ist, einer Nachricht (600, 700), die Folgendes identifiziert:
eine Adresse eines nachgeordneten Knotens; und
Information, die eine Änderung in einem Zustand des nachgeordneten Knotens identifiziert oder Information, die eine Fähigkeit des nachgeordneten Knotens identifiziert; und das **gekennzeichnet ist durch**:
Verkapseln der Nachricht in wenigstens eines von Folgendem: einen Testanfragerahmen, einen Assoziationsanfragerahmen oder einen Aktionsrahmen eines Mitglieds bzw. einer Version der IEEE-802.11-Drahtlosprotokollfamilie.

2. Verfahren nach Anspruch 1, das weiter Folgendes aufweist:
Bestimmen der Änderung eines Zustandes des nachgeordneten Knotens basierend auf einer Anzeige in einem Assoziationsanfragerahmen, einem Testanfragerahmen, einem Disassoziationsrahmen oder einer Weiterleitungsaktualisierungsprozedurbenachrichtigung,
wobei die Generierung der Nachricht auf der Bestimmung basiert.

3. Verfahren nach Anspruch 1, wobei Information, die die Änderung des Zustandes des nachgeordneten Knotens identifiziert ein oder mehrere Flags aufweist, die Folgendes anzeigen: ob sich der nachgeordnete Knoten mit der Vorrichtung oder einem Descendant bzw. Nachfolger der Vorrichtung assoziiert hat oder nicht, ob sich der nachgeordnete Knoten von der Vorrichtung oder einem Nachfolger bzw. nachgeordneten Knoten der Vorrichtung getrennt bzw. disassoziiert hat oder nicht, ob der nachgeordnete Knoten ein Verhalten geändert hat von einem Weiterleitungs- bzw. Relaisknoten zu einem Nicht-Weiterleitungs- bzw. Nicht-Relais-Knoten oder nicht, oder ob der nachgeordnete Knoten ein Verhalten geändert hat von einem Nicht-Relais-Knoten zu einem Relaisknoten oder nicht.

4. Verfahren nach Anspruch 1, wobei das Generieren der Nachricht Folgendes aufweist:
Empfangen einer Aktualisierung von dem Child-Knoten der Vorrichtung;
Generieren der Nachricht basierend auf der Aktualisierung; und
Vorsehen der Nachricht an einen Parent- bzw. Eltern-Knoten der Vorrichtung, wobei der Parent-Knoten als ein nächster unmittelbarer Zugriffspunkt für die Vorrichtung dient.

5. Verfahren nach Anspruch 4, das weiter Inkrementieren einer Sprung- bzw. Hop-Zählung der Aktualisierungsnachricht aufweist, wenn die Nachricht basierend auf der Aktualisierung generiert wird.

6. Verfahren nach Anspruch 1, wobei das Generieren der Nachricht Aufnehmen einer Source- bzw. Quellenadresse der Vorrichtung in die Nachricht aufweist.

7. Verfahren nach Anspruch 1, das weiter auf Empfangen einer Nachricht hin, die die Änderung des Zustandes anzeigt, Aktualisieren von Weiterleitungs- bzw. Routing-Information für den nachgeordneten Knoten aufweist.

8. Eine Vorrichtung zum Vorsehen von Information in einem Drahtlosnetzwerk (100, 200, 250, 400, 450, 500), die Folgendes aufweist:
Mittel zum Generieren (1010) einer Nachricht (600, 700), die Folgendes identifiziert:
eine Adresse eines nachgeordneten Knotens, der kommunikativ mit der Vorrichtung gekoppelt ist, wobei der nachgeordnete Knoten ein Child-Knoten oder ein nachfolgender Child-Knoten hinsichtlich der Vorrichtung ist; und
Information, die eine Änderung in einem Zustand des Descendants bzw. Nachfolgers identifiziert; und
Mittel zum Vorsehen der Nachricht zur Übertragung; und die **gekennzeichnet ist durch**:
Mittel zum Verkapseln der Nachricht in wenigstens eines von Folgendem: einen Testanfragerahmen, einen Assoziationsanfragerahmen oder einen Aktionsrahmen eines Mitglieds bzw. einer Version der IEEE-802.11-Drahtlosprotokollfamilie.

9. Vorrichtung nach Anspruch 8, die weiter Folgendes aufweist:
Mittel zum Bestimmen einer Änderung eines Zustandes des nachgeordneten Knotens basierend auf einer Anzeige in einem Assoziationsanfragerahmen, einem Testanfragerahmen, einem Disassoziationsrahmen oder einer Weiterleitungsaktualisierungsprozedurbenachrichtigung,
wobei die Generierung der Nachricht auf der Bestimmung basiert.

10. Vorrichtung nach Anspruch 8, wobei Information, die die Änderung des Zustandes des nachgeordneten Knotens identifiziert, ein oder mehrere Flags aufweist, die Folgendes anzeigen: ob sich der nachgeordnete Knoten mit der Vorrichtung oder einem Descendant bzw. Nachfolger der Vorrichtung assoziiert hat oder nicht, ob sich der nachgeordnete Knoten von der Vorrichtung oder einem Nachfolger bzw. nachgeordneten Knoten der Vorrichtung getrennt bzw. disassoziiert hat oder nicht, ob der nachgeordnete Knoten ein Verhalten geändert hat von einem Weiterleitungs- bzw. Relaisknoten zu einem Nicht-Weiterleitungs- bzw. Nicht-Relais-Knoten oder nicht, oder ob der nachgeordnete Knoten ein Verhalten geändert hat von einem Nicht-Relais-Knoten zu einem Relaisknoten oder nicht.

11. Vorrichtung nach Anspruch 8, wobei die Mittel zum Generieren der Nachricht Folgendes aufweisen:
Mittel zum Empfangen einer Aktualisierung von dem Kind- bzw. Child-Knoten der Vorrichtung;
Mittel zum Generieren der Nachricht basierend auf der Aktualisierung; und
Mittel zum Vorsehen der Nachricht an einen Eltern- bzw. Parent-Knoten der Vorrichtung.

12. Vorrichtung nach Anspruch 11, die weiter Mittel aufweist zum Inkrementieren einer Sprung- bzw. Hop-Zählung der Aktualisierungsnachricht, wenn die Nachricht basierend auf der Aktualisierung generiert wird.

13. Vorrichtung nach Anspruch 8, wobei die Mittel zum Generieren der Nachricht Mittel aufweisen zum Aufnehmen einer Source- bzw. Quellenadresse der Vorrichtung in die Nachricht.

14. Ein Drahtlosknoten, der die Vorrichtung nach Anspruch 8 aufweist, und weiter Folgendes aufweist:
einen Sender, der konfiguriert ist zum Senden der Nachricht.

15. Ein computerlesbares Medium mit darauf gespeicherten Instruktionen, wobei die Instruktionen durch einen oder mehrere Prozessoren ausgeführt werden können zum Durchführen des Verfahrens nach einem der Ansprüche 1-7.

## Revendications

1. Procédé (900) de fourniture d'informations dans un réseau sans fil (100, 200, 250, 400, 450, 500), comprenant :
générer (910), par un dispositif qui est couplé en communication avec un noeud descendant dans une topologie à plusieurs niveaux, le noeud descendant étant un noeud enfant ou un noeud enfant successif par rapport au dispositif, un message (600, 700) identifiant :
une adresse du noeud descendant ; et
des informations identifiant un changement dans l'état du noeud descendant ou des informations identifiant une capacité du noeud descendant ; et **caractérisé par**
encapsuler le message dans au moins l'une d'une trame de demande de sondage, d'une trame de demande d'association ou d'une trame d'action d'un élément de la famille de protocoles sans fil 802.11.

2. Procédé selon la revendication 1, comprenant en outre :
déterminer le changement dans l'état du noeud descendant sur la base d'une indication dans une trame de demande d'association, une trame de demande de sondage, une trame de dissociation ou une notification de mise à jour de relais,
dans lequel la génération du message est basée sur la détermination.

3. Procédé selon la revendication 1, dans lequel des informations identifiant le changement dans l'état du noeud descendant comprennent un ou plusieurs drapeaux indiquant : si le noeud descendant s'est associé ou non avec le dispositif ou un descendant du dispositif, si le noeud descendant s'est dissocié ou non du dispositif ou d'un descendant du dispositif, si le noeud descendant a changé ou non de comportement d'un noeud relais vers un noeud non de relais, ou si le noeud descendant a changé ou non de comportement d'un noeud non de relais vers un noeud relais.

4. Procédé selon la revendication 1, dans lequel la génération du message comprend :
recevoir une mise à jour à partir d'un noeud enfant du dispositif ;
générer le message sur la base de la mise à jour ; et
fournir le message à un noeud parent du dispositif, le noeud parent servant de point d'accès immédiat suivant pour le dispositif.

5. Procédé selon la revendication 4, comprenant en outre l'incrémentation d'un compte de sauts du message de mise à jour lors de la génération du message sur la base de la mise à jour.

6. Procédé selon la revendication 1, dans lequel la génération du message comprend d'inclure une adresse source du dispositif dans le message.

7. Procédé selon la revendication 1, comprenant en outre, lors de la réception d'un message indiquant le changement d'état, la mise à jour d'informations de routage pour le noeud descendant.

8. Dispositif pour fournir des informations dans un réseau sans fil (100, 200, 250, 400, 450, 500), le dispositif comprenant :
des moyens pour générer (1010) un message (600, 700) identifiant :
une adresse d'un noeud descendant couplé en communication avec le dispositif, le noeud descendant étant un noeud enfant ou un noeud enfant successif par rapport au dispositif ; et
des informations identifiant un changement dans l'état du descendant ; et
des moyens pour fournir le message pour transmission ; et **caractérisé par**
des moyens pour encapsuler le message dans au moins l'une d'une trame de demande de sondage, d'une trame de demande d'association ou une trame d'action d'un élément de la famille de protocoles sans fil 802.11.

9. Dispositif selon la revendication 8, comprenant en outre :
des moyens pour déterminer un changement dans l'état du noeud descendant sur la base d'une indication dans une trame de demande d'association, une trame de demande de sondage, une trame de dissociation ou une notification de mise à jour de relais,
dans lequel la génération du message est basée sur la détermination.

10. Dispositif selon la revendication 8, dans lequel des informations identifiant le changement dans l'état du noeud descendant comprennent un ou plusieurs drapeaux indiquant : si le noeud descendant s'est associé ou non avec le dispositif ou un descendant du dispositif, si le noeud descendant s'est dissocié ou non du dispositif ou d'un descendant du dispositif, si le noeud descendant a changé ou non de comportement d'un noeud relais vers un noeud non de relais, ou si le noeud descendant a changé ou non de comportement d'un noeud non de relais vers un noeud relais.

11. Dispositif selon la revendication 8, dans lequel les moyens pour générer le message comprennent :
des moyens pour recevoir une mise à jour à partir d'un noeud enfant du dispositif ;
des moyens pour générer le message sur la base de la mise à jour ; et
des moyens pour fournir le message à un noeud parent du dispositif.

12. Dispositif selon la revendication 11, comprenant en outre des moyens pour incrémenter un compte de sauts du message de mise à jour lors de la génération du message sur la base de la mise à jour.

13. Dispositif selon la revendication 8, dans lequel les moyens pour générer le message comprend des moyens pour inclure une adresse source du dispositif dans le message.

14. Noeud sans fil comprenant le dispositif selon la revendication 8, et comprenant en outre :
un émetteur agencé pour émettre le message.

15. Support lisible par un ordinateur comportant des instructions mémorisées sur lui, les instructions étant exécutables par un ou plusieurs processeurs pour réaliser le procédé de l'une quelconque des revendications 1 à 7.
